# FASCICULE DE BREVET EUROPEEN

(11) **EP 3 198 371 B1**
(45) Date de publication et mention de la délivrance du brevet: **08.05.2019**
(21) Numéro de dépôt: 15757319.7
(22) Date de dépôt: 31.07.2015
(51) Int. Cl.: G06F 3/01, G06F 3/0362

(54) **INTERFACE DE COMMANDE À RETOUR HAPTIQUE POUR VÉHICULE AUTOMOBILE**
STEUERUNGSSCHNITTSTELLE ZUR HAPTISCHEN RÜCKMELDUNG FÜR EIN KRAFTFAHRZEUG
HAPTIC-FEEDBACK CONTROL INTERFACE FOR A MOTOR VEHICLE

(30) Priorité: 31.07.2014 FR 1401770
(43) Date de publication de la demande: 02.08.2017
(73) Titulaire: DAV, 94046 Créteil Cedex (FR)
(72) Inventeur: VANHELLE, Stéphane, 94046 Créteil CEDEX (FR)
(74) Mandataire: Delplanque, Arnaud
(86) Numéro de dépôt international: PCT/FR2015/052131
(87) Numéro de publication internationale: WO 2016/016592

(56) Documents cités:
- DE-A1- 19 528 457
- FR-A1- 2 930 654
- FR-A1- 2 930 655

## Description

La présente invention concerne une interface de commande pour véhicule automobile permettant de transmettre un retour haptique à un utilisateur pour l'informer de la prise en compte d'une commande.

Le retour haptique, généré par exemple à l'utilisateur manipulant une molette, est généralement composé de forces de résistance de valeurs variables, créant des points durs et paliers, correspondant à différentes commandes pour les dispositifs pilotés via l'interface. Le retour haptique est avantageux en voiture car il ne nécessite que peu d'attention de la part du conducteur, en particulier, il ne nécessite pas que le conducteur détourne son regard de la route.

On connait des interfaces comportant un fluide magnéto-rhéologique capable de créer un effort de freinage à un élément mobile dans le fluide lorsqu'un champ magnétique est appliqué sur le fluide du fait que la viscosité du fluide magnéto-rhéologique change avec l'intensité du champ magnétique appliqué. Plus précisément, les fluides magnéto-rhéologiques sont composés de particules métalliques en suspension. Lorsqu'un champ magnétique est appliqué, les particules s'orientent selon les lignes de champ. L'alignement des particules selon les lignes de champ dans la zone soumise au champ modifie la viscosité du liquide. Les fluides magnéto-rhéologiques peuvent ainsi générer un effort de freinage sur l'élément mobile baignant dans le fluide magnéto-rhéologique.

Cependant, pour les faibles valeurs d'efforts de freinage, telles que celles d'un couple de freinage d'un bouton rotatif, ces interfaces peuvent présenter des variations de performances liées à la possible sédimentation des particules, rendant le fluide magnéto-rhéologique inhomogène. Ce phénomène peut se produire ou s'accentuer notamment sur des designs verticaux, dans lesquels l'élément mobile s'étend verticalement dans le véhicule automobile, c'est-à-dire parallèlement à la direction de la gravité, les particules métalliques pouvant s'accumuler par gravité du côté bas.

Afin de résoudre au moins en partie cet inconvénient, la présente invention a pour objet une interface de commande à retour haptique pour véhicule automobile comportant un module de fluide magnéto-rhéologique comprenant un élément mobile, un fluide magnéto-rhéologique reçu dans une cavité du module de fluide magnéto-rhéologique et en contact avec l'élément mobile et une unité d'application d'un champ magnétique configurée pour appliquer un champ magnétique au fluide magnéto-rhéologique et pour modifier l'intensité du champ magnétique appliqué afin de générer un retour haptique à l'utilisateur déplaçant l'élément mobile par modification du champ magnétique appliqué au fluide magnéto-rhéologique, caractérisée en ce que la cavité et l'élément mobile sont conformés pour que l'épaisseur de l'espace rempli par le fluide magnéto-rhéologique soit inférieure à 0,35 millimètres.

Le design de la cavité contenant le fluide magnéto-rhéologique et de l'élément mobile en contact avec le fluide limitant l'épaisseur du volume du fluide, permet d'assurer l'adhésion du fluide magnéto-rhéologique aux parois par effet de mouillage. On réduit ainsi les risques éventuels d'inhomogénéités des efforts de freinage générés, pouvant se produire par gravité ou sédimentation des particules dans le fluide, sans nécessiter de sur-dimensionner l'unité d'application d'un champ magnétique.

Selon une ou plusieurs caractéristiques de l'interface de commande, prise seule ou en combinaison,
- la cavité et l'élément mobile sont conformés pour que l'épaisseur de l'espace rempli par le fluide magnéto-rhéologique soit inférieure ou égale à 0,3 millimètres,
- la cavité et l'élément mobile sont conformés pour que l'épaisseur de l'espace rempli par le fluide magnéto-rhéologique soit supérieure à 0,25 millimètres,
- l'élément mobile comporte plusieurs parois en regard d'au moins une paroi de la cavité,
- la cavité comporte plusieurs parois en regard d'au moins une paroi de l'élément mobile,
- l'interface de commande comporte en outre un dispositif de génération d'un champ magnétique permanent agencé à proximité de la cavité pour générer un champ magnétique permanent additionnel sur le fluide magnéto-rhéologique,
- le dispositif de génération d'un champ magnétique permanent comporte un aimant permanent formé par une portion aimantée de la cavité,
- le dispositif de génération d'un champ magnétique permanent est agencé à l'opposé de zones mortes dans lesquelles les particules du fluide magnéto-rhéologique sont susceptibles de s'accumuler,
- l'interface de commande comporte au moins un joint de cloisonnement souple agencé entre la cavité et l'élément mobile et séparant le liquide magnéto-rhéologique en deux volumes superposés,
- le joint de cloisonnement comporte un joint à lèvres.

D'autres caractéristiques et avantages de l'invention ressortiront de la description suivante, donnée à titre d'exemple et sans caractère limitatif, en regard des dessins annexés sur lesquels :
- la figure 1 représente une vue schématique d'un premier exemple de réalisation d'une interface de commande à retour haptique,
- la figure 2 représente une vue agrandie du cadre en pointillés de la figure 1, et
- la figure 3 représente une vue schématique de la zone agrandie pour un deuxième exemple de réalisation de l'interface.

Sur toutes les figures, les mêmes éléments portent les mêmes numéros de référence.

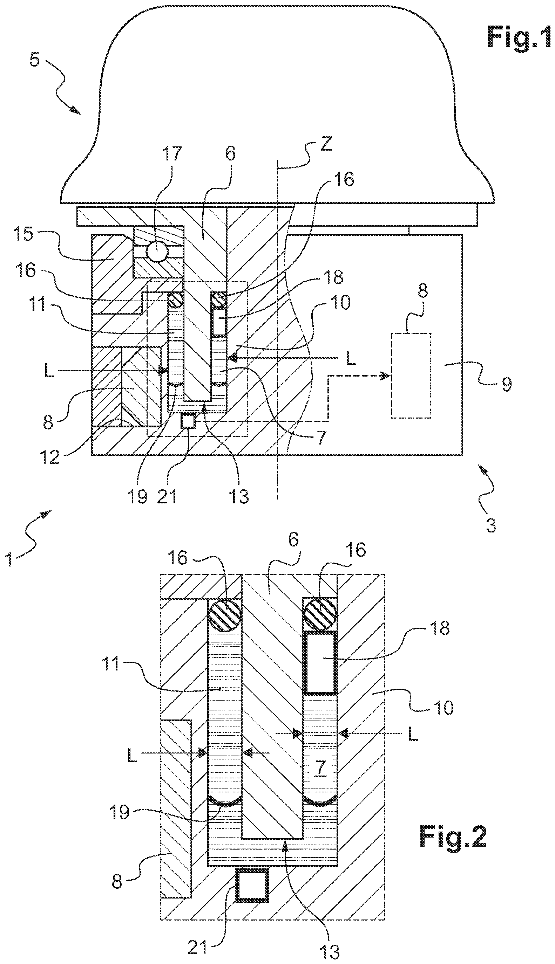

La figure 1 représente une interface de commande 1 à retour haptique pour véhicule automobile, par exemple montée dans le tableau de bord ou dans une console centrale du véhicule, pour commander des systèmes embarqués du véhicule tels que le système de climatisation, de radio, du téléphone, de ventilation ou de navigation.

L'interface de commande 1 comporte un module de fluide magnéto-rhéologique 3.

Le module de fluide magnéto-rhéologique 3 comporte un élément mobile 6, une cavité 11, un fluide magnéto-rhéologique 7 reçu dans la cavité 11 et en contact avec l'élément mobile 6, et une unité d'application 8 d'un champ magnétique configurée pour appliquer un champ magnétique au fluide magnéto-rhéologique 7 et pour modifier l'intensité du champ magnétique appliqué.

L'élément mobile 6 est par exemple mobile en rotation ou en translation. Il est représenté mobile en rotation sur les figures 1, 2 et 3.

Le module de fluide magnéto-rhéologique 3 peut comporter un élément de préhension 5, solidaire de l'élément mobile 6, c'est-à-dire rigidement lié à l'élément mobile 6. L'élément de préhension 5 est par exemple fait de matière avec l'élément mobile 6 ou clipsé sur l'élément mobile 6 ou fixé par goupille ou par tout autre moyen de fixation connu. Alternativement, l'élément de préhension 5 peut être couplé à l'élément mobile 6 via un système d'engrenages, chaînes, courroies ou tout autre moyen mécanique permettant d'assurer un couplage entre l'élément de préhension 5 et l'élément mobile 6.

Un retour haptique est généré à l'utilisateur qui déplace l'élément mobile 6 via l'élément de préhension 5, par modification du champ magnétique appliqué au fluide magnéto-rhéologique 7. On désigne par « haptique » un retour par le toucher, tel qu'une force de résistance variable.

En effet, le fluide magnéto-rhéologique 7 présente la propriété que sa viscosité varie sous l'effet d'un champ magnétique variable. Ainsi, la force de frottement induite par le fluide magnéto-rhéologique 7 est faible lorsqu'aucun champ magnétique n'est appliqué et devient de plus en plus importante lorsque l'intensité du champ magnétique augmente. Les fluides magnéto-rhéologiques peuvent ainsi être utilisés en tant que freins magnéto-rhéologique. Par exemple, l'application d'une intensité en forme de créneau permet de créer des points durs au niveau des points d'indexage pour lesquels l'intensité est importante.

La cavité 11 et l'élément mobile 6 sont conformés pour que l'épaisseur de l'espace rempli par le fluide magnéto-rhéologique 7, telle que l'écart L entre les parois parallèles de la cavité 11 et l'élément mobile 6, soit inférieure à 0,35 millimètres (figure 2). On peut prévoir que cette distance soit supérieure à 0,25 millimètres, pour être comprise par exemple entre 0,25 et 0,3 millimètres.

Le design de la cavité 11 contenant le fluide magnéto-rhéologique 7 et de l'élément mobile 6 en contact avec le fluide limitant l'épaisseur du volume du fluide, permet d'assurer l'adhésion du fluide magnéto-rhéologique 7 aux parois par effet de mouillage. On réduit ainsi les risques éventuels d'inhomogénéités des efforts de freinage générés, pouvant se produire par sédimentation des particules dans le fluide, sans nécessiter de sur-dimensionner l'unité d'application d'un champ magnétique.

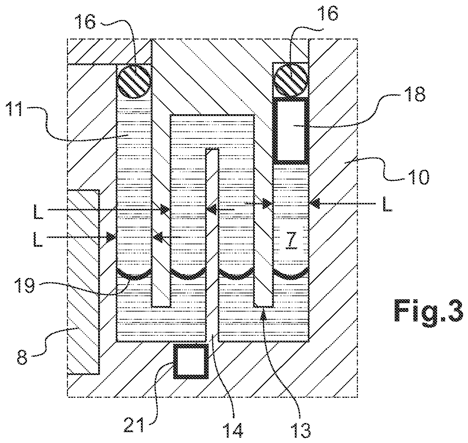

L'élément mobile 6 peut comporter plusieurs parois 13 en regard d'au moins une paroi 14 de la cavité, comme représenté sur la figure 3. La cavité 11 peut comporter plusieurs parois 14 en regard d'au moins une paroi 13 de l'élément mobile 6. Ainsi, l'épaisseur de l'espace rempli par le fluide magnéto-rhéologique 7 peut être la distance L entre une paroi de l'élément mobile 6 et une paroi de la cavité 11 ou entre deux parois de l'élément mobile 6 ou entre deux parois de la cavité 11.

Autrement dit, l'épaisseur de l'espace rempli par le fluide magnéto-rhéologique 7 est une distance horizontale s'étendant perpendiculairement à la direction de la gravité dans le cas le moins favorable pour lequel les parois 13 de l'élément mobile 6 et les parois 14 de la cavité 11 sont agencées verticalement dans le véhicule automobile, c'est-à-dire parallèlement à la direction de la gravité.

L'interface de commande 1 peut en outre comporter un dispositif de génération d'un champ magnétique permanent 18 agencé à proximité de la cavité 11 pour générer un champ magnétique permanent additionnel sur le fluide magnéto-rhéologique 7.

Le dispositif de génération d'un champ magnétique permanent 18 comporte par exemple un aimant permanent.

L'aimant permanent est positionné et dimensionné pour générer un champ magnétique anti-sédimentation permettant d'éviter ou au moins de ralentir la descente par gravité des particules du fluide magnéto-rhéologique 7. Le champ magnétique anti-sédimentation est de faible niveau pour ne pas influer sur le retour haptique généré par le champ magnétique appliqué par l'unité d'application 8.

L'aimant permanent peut être solidaire de l'élément mobile 6 ou de la partie fixe du module de fluide magnéto-rhéologique 3. Il peut être un élément distinct des éléments du module de fluide magnéto-rhéologique 3 ou peut être formé dans une portion aimantée de la cavité 11, par exemple par injection. L'aimant permanent est par exemple réalisé en matériau plastoferrite.

Le dispositif de génération d'un champ magnétique permanent 18 est agencé à l'opposé de zones mortes dans lesquelles les particules du fluide magnéto-rhéologique 7 sont susceptibles de s'accumuler par gravité ou sédimentation. Le dispositif de génération d'un champ magnétique permanent 18 est par exemple agencé dans la partie supérieure de la cavité 11. Il peut être en contact ou à proximité du fluide magnéto-rhéologique 7.

L'interface de commande 1 peut comporter au moins un joint de cloisonnement 19 souple agencé entre la cavité 11 et l'élément mobile 6 et séparant le liquide magnéto-rhéologique 7 en deux volumes superposés. Le joint de cloisonnement 19 comporte par exemple un joint à lèvres. Le joint de cloisonnement 19 est souple, c'est-à-dire qu'il n'empêche pas le déplacement de l'élément mobile 6 par rapport à la cavité 11. Le joint de cloisonnement 19 permet de segmenter le fluide magnéto-rhéologique 7 sur au moins deux niveaux en évitant ainsi que toutes les particules en suspension ne tombent au fond de la cavité 11 par gravité ou sédimentation en cas d'inutilisation prolongée.

Selon l'exemple de réalisation représenté sur les figures 1 à 3, le module de fluide magnéto-rhéologique 3 comporte une embase 9 présentant une forme générale cylindrique s'étendant selon un axe de rotation Z du module 3, obturée à l'une de ses extrémités par un axe central fixe 10 orienté selon l'axe de rotation Z, définissant une cavité 11 annulaire. L'élément mobile 6 est monté mobile sur l'embase 9 fixe, autour de l'axe de rotation Z.

La cavité 11 reçoit d'une part le fluide magnéto-rhéologique 7 et d'autre part une extrémité de l'élément mobile 6. L'élément mobile 6 est alors partiellement immergé dans le fluide magnéto-rhéologique 7.

L'élément mobile 6 rotatif et/ou la cavité 11 peuvent comporter plusieurs parois annulaires et en regard (figure 3). Ainsi, l'extrémité de l'élément mobile 6 en contact avec le fluide magnéto-rhéologique 7 peut comporter plusieurs parois d'extrémité 13 cylindriques et concentriques, s'étendant selon l'axe de rotation Z, et venant en regard de parois complémentaires s'étendant depuis le fond de la cavité 11. Par exemple, l'embase 9 comporte une paroi complémentaire 14, venant s'intercaler entre les parois d'extrémité 13 de l'élément mobile 6. Il est ainsi plus facile de maitriser l'épaisseur L du fluide magnéto-rhéologique 7. En outre, cela permet d'augmenter les surfaces en regard entre l'élément mobile 6 et l'embase 9 et ainsi d'augmenter le couple de force que l'on peut exercer sur l'élément mobile 6 avec une alimentation donnée.

L'interface de commande 1 peut comporter un dispositif de génération d'un champ magnétique permanent 18 agencé dans la partie supérieure de la cavité 11.

Le module de fluide magnéto-rhéologique 3 peut comporter un capteur de position 21 de l'élément mobile 6 relié à l'unité d'application 8 d'un champ magnétique. Le capteur de position 21 permet de détecter la position de l'élément mobile 6 afin d'adapter le pilotage de l'unité d'application 8 d'un champ magnétique au fluide magnéto-rhéologique 7 au retour haptique souhaité.

Le module de fluide magnéto-rhéologique 3 comporte en outre des joints 16, par exemple intercalés d'une part, entre la cavité 11 et un couvercle 15 fermant la cavité 11 et d'autre part, entre la cavité 11 et un épaulement de l'élément mobile 6. Les joints 16 assurent l'étanchéité pour éviter toute fuite du fluide magnéto-rhéologique 7 hors de la cavité 11. Le couvercle 15 comprend également un logement recevant un palier ou roulement à bille 17 qui assure la liaison en rotation entre l'embase 9 et l'élément mobile 6.

L'embase 9 présente également un logement annulaire 12 qui entoure au moins partiellement la cavité 11. Le logement annulaire 12 reçoit une ou plusieurs bobine(s) qui, avec son (leurs) alimentation(s) (non représentée(s)), forme l'unité d'application 8 d'un champ magnétique sur le fluide magnéto-rhéologique 7.

Le champ magnétique créé par une bobine étant proportionnel au courant qui la traverse, on peut faire varier l'intensité du champ magnétique créé au centre de la bobine en faisant varier l'alimentation de la bobine. La variation de l'intensité du champ magnétique appliqué au fluide magnéto-rhéologique 7, permet de faire varier la viscosité du fluide, et ainsi la force de frottement exercée par le fluide. On peut ainsi faire varier la force avec laquelle l'élément mobile 6 peut être tourné pour générer un retour haptique spécifique à l'utilisateur manipulant l'élément mobile 6.

Différentes formes ou profils de retour haptique peuvent ainsi être obtenus en fonction de la configuration de l'unité d'application 8. Par exemple, l'intensité du champ magnétique peut avoir une forme en créneau dans laquelle l'intensité est nulle ou faible sauf au niveau des positions d'indexage où cette intensité est forte de manière à créer une force de frottement importante au passage des points d'indexage. D'autres motifs ou profils de force de résistance en fonction de la position sont également possibles, par exemple des profils triangulaires ou en dents de scie répartis autour des positions d'indexage, de sorte que celles-ci soit perçues comme un point dur progressif à surmonter, une fois pour l'atteindre, et une fois pour s'en éloigner ou seulement pour l'atteindre.

## Revendications

1. Interface de commande à retour haptique pour véhicule automobile comportant un module de fluide magnéto-rhéologique (3) comprenant un élément mobile (6), un fluide magnéto-rhéologique (7) reçu dans une cavité (11) du module de fluide magnéto-rhéologique (3) et en contact avec l'élément mobile (6) et une unité d'application (8) d'un champ magnétique configurée pour appliquer un champ magnétique au fluide magnéto-rhéologique (7) et pour modifier l'intensité du champ magnétique appliqué afin de générer un retour haptique à l'utilisateur déplaçant l'élément mobile (6) par modification du champ magnétique appliqué au fluide magnéto-rhéologique (7), **caractérisée en ce que** la cavité (11) et l'élément mobile (6) sont conformés pour que l'épaisseur (L) de l'espace rempli par le fluide magnéto-rhéologique (7) soit inférieure à 0,35 millimètres.

2. Interface de commande selon la revendication précédente, **caractérisée en ce que** la cavité (11) et l'élément mobile (6) sont conformés pour que l'épaisseur (L) de l'espace rempli par le fluide magnéto-rhéologique (7) soit inférieure ou égale à 0,3 millimètres.

3. Interface de commande selon l'une des revendications précédentes, **caractérisée en ce que** la cavité (11) et l'élément mobile (6) sont conformés pour que l'épaisseur (L) de l'espace rempli par le fluide magnéto-rhéologique (7) soit supérieure à 0,25 millimètres.

4. Interface de commande selon l'une des revendications précédentes, **caractérisée en ce que** l'élément mobile (6) comporte plusieurs parois (13) en regard d'au moins une paroi (14) de la cavité (11).

5. Interface de commande selon l'une des revendications précédentes, **caractérisée en ce que** la cavité (11) comporte plusieurs parois (14) en regard d'au moins une paroi (13) de l'élément mobile (6).

6. Interface de commande selon l'une des revendications précédentes, **caractérisée en ce qu'**elle comporte en outre un dispositif de génération d'un champ magnétique permanent (18) agencé à proximité de la cavité (11) pour générer un champ magnétique permanent additionnel sur le fluide magnéto-rhéologique (7).

7. Interface de commande selon la revendication précédente, **caractérisée en ce que** le dispositif de génération d'un champ magnétique permanent (18) comporte un aimant permanent formé par une portion aimantée de la cavité (11).

8. Interface de commande selon l'une des revendications 6 ou 7, **caractérisée en ce que** le dispositif de génération d'un champ magnétique permanent (18) est agencé à l'opposé de zones mortes dans lesquelles les particules du fluide magnéto-rhéologique (7) sont susceptibles de s'accumuler.

9. Interface de commande selon l'une des revendications précédentes, **caractérisée en ce qu'**elle comporte au moins un joint de cloisonnement (19) souple agencé entre la cavité (11) et l'élément mobile (6) et séparant le liquide magnéto-rhéologique (7) en deux volumes superposés.

10. Interface de commande selon la revendication précédente, **caractérisée en ce que** le joint de cloisonnement (19) comporte un joint à lèvres.

## Patentansprüche

1. Steuerungsschnittstelle zur haptischen Rückmeldung für ein Kraftfahrzeug, aufweisend ein Modul für magnetorheologisches Fluid (3) umfassend ein bewegliches Element (6), ein magnetorheologisches Fluid (7), das in einem Hohlraum (11) des Moduls für magnetorheologisches Fluid (3) aufgenommen ist und mit dem beweglichen Element (6) in Kontakt steht, und eine Einheit zur Anwendung (8) eines Magnetfelds, die dafür eingerichtet ist, ein Magnetfeld auf das magnetorheologische Fluid (7) anzuwenden und die Stärke des angewandten Magnetfelds zu verändern, um eine haptische Rückmeldung für den Benutzer zu erzeugen, die das bewegliche Element (6) durch Veränderung des Magnetfelds, das auf das magnetorheologische Fluid (7) angewandt wird, bewegen, **dadurch gekennzeichnet, dass** der Hohlraum (11) und das bewegliche Element (6) so beschaffen sind, dass die Dicke (L) des Raums, der von dem magnetorheologischen Fluid (7) ausgefüllt wird, kleiner als 0,35 Millimeter ist.

2. Steuerungsschnittstelle nach dem vorhergehenden Anspruch, **dadurch gekennzeichnet, dass** der Hohlraum (11) und das bewegliche Element (6) so beschaffen sind, dass die Dicke (L) des Raums, der von dem magnetorheologischen Fluid (7) ausgefüllt wird, kleiner oder gleich 0,3 Millimeter ist.

3. Steuerungsschnittstelle nach einem der vorhergehenden Ansprüche, **dadurch gekennzeichnet, dass** der Hohlraum (11) und das bewegliche Element (6) so beschaffen sind, dass die Dicke (L) des Raums, der von dem magnetorheologischen Fluid (7) ausgefüllt wird, größer als 0,25 Millimeter ist.

4. Steuerungsschnittstelle nach einem der vorhergehenden Ansprüche, **dadurch gekennzeichnet, dass** das bewegliche Element (6) mehrere Wände (13) gegenüber mindestens einer Wand (14) des Hohlraums (11) aufweist.

5. Steuerungsschnittstelle nach einem der vorhergehenden Ansprüche, **dadurch gekennzeichnet, dass** der Hohlraum (11) mehrere Wände (14) gegenüber mindestens einer Wand (13) des beweglichen Elements (6) aufweist.

6. Steuerungsschnittstelle nach einem der vorhergehenden Ansprüche, **dadurch gekennzeichnet, dass** sie ferner eine Vorrichtung zur Erzeugung eines Dauermagnetfelds (18) aufweist, die in der Nähe des Hohlraums (11) angeordnet ist, um ein zusätzliches Dauermagnetfeld auf dem magnetorheologischen Fluid (7) zu erzeugen.

7. Steuerungsschnittstelle nach dem vorhergehenden Anspruch, **dadurch gekennzeichnet, dass** die Vorrichtung zur Erzeugung eines Dauermagnetfelds (18) einen Dauermagneten aufweist, der von einem magnetisierten Abschnitt des Hohlraums (11) gebildet ist.

8. Steuerungsschnittstelle nach einem der Ansprüche 6 oder 7, **dadurch gekennzeichnet, dass** die Vorrichtung zur Erzeugung eines Dauermagnetfelds (18) gegenüber von toten Bereichen angeordnet ist, in denen sich die Partikel des magnetorheologischen Fluids (7) ansammeln können.

9. Steuerungsschnittstelle nach einem der vorhergehenden Ansprüche, **dadurch gekennzeichnet, dass** sie mindestens eine weiche Trenndichtung (19) aufweist, die zwischen dem Hohlraum (11) und dem beweglichen Element (6) angeordnet ist und die magnetorheologische Flüssigkeit (7) in zwei übereinander gelagerte Volumen trennt.

10. Steuerungsschnittstelle nach dem vorhergehenden Anspruch, **dadurch gekennzeichnet, dass** die Trenndichtung (19) eine Lippendichtung umfasst.

## Claims

1. Haptic-feedback control interface for a motor vehicle comprising a magnetorheological fluid module (3) comprising a mobile element (6), a magnetorheological fluid (7) received in a cavity (11) of the magnetorheological fluid module (3) and in contact with the mobile element (6) and a unit (8) for applying a magnetic field configured to apply a magnetic field to the magnetorheological fluid (7) and to modify the intensity of the magnetic field applied in order to generate a haptic feedback to the user displacing the mobile element (6) by modifying the magnetic field applied to the magnetorheological fluid (7), **characterized in that** the cavity (11) and the mobile element (6) are conformed for the thickness (L) of the space filled by the magnetorheological fluid (7) to be less than 0.35 millimetres.

2. Control interface according to the preceding claim, **characterized in that** the cavity (11) and the mobile element (6) are conformed for the thickness (L) of the space filled by the magnetorheological fluid (7) to be less than or equal to 0.3 millimetres.

3. Control interface according to one of the preceding claims, **characterized in that** the cavity (11) and the mobile element (6) are conformed for the thickness (L) of the space filled by the magnetorheological fluid (7) to be greater than 0.25 millimetres.

4. Control interface according to one of the preceding claims, **characterized in that** the mobile element (6) comprises several walls (13) facing at least one wall (14) of the cavity (11).

5. Control interface according to one of the preceding claims, **characterized in that** the cavity (11) comprises several walls (14) facing at least one wall (13) of the mobile element (6).

6. Control interface according to one of the preceding claims, **characterized in that** it further comprises a device for generating a permanent magnetic field (11) arranged in proximity to the cavity (11) to generate an additional permanent magnetic field on the magnetorheological fluid (7).

7. Control interface according to the preceding claim, **characterized in that** the device for generating a permanent magnetic field (18) comprises a permanent magnet formed by a magnetized portion of the cavity (11) .

8. Control interface according to one of Claims 6 or 7, **characterized in that** the device for generating a permanent magnetic field (18) is arranged opposite dead zones in which the particles of the magnetorheological fluid (7) are likely to accumulate.

9. Control interface according to one of the preceding claims, **characterized in that** it comprises at least one flexible partitioning seal (19) arranged between the cavity (11) and the mobile element (6) and dividing the magnetorheological liquid (7) into two superposed volumes.

10. Control interface according to the preceding claim, **characterized in that** the partitioning seal (19) comprises a lip seal.
